# EUROPÄISCHE PATENTSCHRIFT

(11) **EP 1 442 175 B1**
(45) Veröffentlichungstag und Bekanntmachung des Hinweises auf die Patenterteilung: **30.07.2008**
(21) Anmeldenummer: 02800568.4
(22) Anmeldetag: 24.09.2002
(51) Int. Cl.: E02D 27/32, E02D 27/42

(54) **VERFAHREN ZUR ERSTELLUNG EINES FUNDAMENTS, INSBESONDERE FÜR EINEN TURM EINER WINDENERGIEANLAGE**
METHOD FOR ESTABLISHING A FOUNDATION IN PARTICULAR FOR A TOWER OF A WIND ENERGY PLANT
PROCEDE POUR POSER LES FONDATIONS, NOTAMMENT D'UNE TOUR D'EOLIENNE

(30) Priorität: 09.10.2001 DE 10149669; 11.01.2002 DE 10200728; 18.06.2002 DE 10226996
(43) Veröffentlichungstag der Anmeldung: 04.08.2004
(73) Patentinhaber: Wobben, Aloys, 26607 Aurich (DE)
(72) Erfinder: Wobben, Aloys, 26607 Aurich (DE)
(74) Vertreter: Keck, Stephan
(86) Internationale Anmeldenummer: PCT/EP2002/010673
(87) Internationale Veröffentlichungsnummer: WO 2003/031733

(56) Entgegenhaltungen:
- DE-B- 1 255 992
- DE-C- 546 447
- US-A- 4 218 858
- US-A- 5 664 377

## Beschreibung

Die Erfindung betrifft ein Verfahren zur Erstellung eines Fundamentes für ein mehrere Segmente aufweisendes Bauwerk, insbesondere für einen Turm einer Windenergieanlage. Die Erfindung betrifft außerdem eine Stützstange, ein Fundamentsegment für ein solches Bauwerk sowie eine Windenergienanlage.

Für größere Bauwerke ist die Erstellung eines dauerhaft stabilen und ebenen Fundamentes von enormer Bedeutung. Insbesondere für einen Turm einer Windenergieanlage, der Höhen von über 100 m aufweisen kann und der im Betrieb enormen Kräften ausgesetzt ist, muss das Fundament hohen Anforderungen genügen.

Derzeit wird das Fundament einer Windenergieanlage erstellt, indem zunächst in einem Fundamentbett eine sogenannte Sauberkeitsschicht, also eine möglichst plan und horizontal verlaufende Zement- oder Betonschicht, erstellt wird. Danach werden an dem Fundamentsegment, also dem untersten Segment des aus mehreren Segmenten bestehenden Turmes, Stützstangen angebracht, mit denen das Fundamentsegment auf der Sauberkeitsschicht abgestellt wird. Um Unebenheiten der Sauberkeitsschicht auszugleichen und das Fundamentsegment möglichst horizontal auszurichten, können die Stützstangen unterschiedlich weit in die Unterseite des Fundamentsegmentes eingeschraubt werden, wozu die Stützstangen mindestens im oberen, der Unterseite des Fundamentsegmentes zuweisenden Bereich in Form einer Gewindestange ausgebildet sind.

Dabei ist vereinzelt vorgekommen, dass aufgrund der hohen seitlichen Belastung der Stützstangen durch das Fundamentsegment, das derzeit ein Gewicht von 10 bis 14 t aufweisen kann, Stützstangen dabei entweder in die Sauberkeitsschicht eingebrochen sind oder dass eine Stützstange an der Unterseite des Fundamentsegmentes abknickte. Dadurch konnte es zum Umstürzen des Fundamentsegmentes kommen. Neben der Gefahr für die mit der Erstellung des Fundamentes betrauten Personen führte diese sowohl zu zeitlichen Verzögerungen als auch zu zusätzlichen Kosten für die Behebung dieser Schäden.

Der Erfindung liegt deshalb die Aufgabe zugrunde, ein verbessertes Verfahren zur Erstellung eines Fundamentes für ein mehrere Segmente aufweisendes Bauwerk, insbesondere für einen Turm einer Windenergieanlage, eine verbesserte Stützstange, ein geeignetes Fundamentsegment sowie eine Windenergieanlage anzugeben, bei denen die vorgenannten Probleme vermieden werden.

Diese Aufgabe wird erfindungsgemäß durch ein Verfahren gemäß Anspruch 6 gelöst, das folgende Schritte aufweist:
a) Ausheben eines Fundamentbetts,
b) Erstellung einer stabilen, im Wesentlichen eben und horizontal verlaufenden Sauberkeitsschicht in dem Fundamentbett,
c) Aufsetzen eines Fundamentsegmentes des Bauwerkes auf der Sauberkeitsschicht, wobei an dem Fundamentsegment verteilt mindestens drei höhenverstellbare, Stützstangen fest mittels jeweils eines am Ende der Stützstangen angebrachten Stützfußes derart angebracht sind, dass nur die Stützstangen auf vorgegebenen Stützpunkten der Sauberkeitsschicht abgestellt werden,
d) Herstellen einer Bewehrung auf der Sauberkeitsschicht,
e) Aufgießen des restlichen Fundamentbetts mit Fundamentmasse, insbesondere Beton, bis über den unteren Rand des Fundamentsegments hinaus.

Der Erfindung liegt dabei die Erkenntnis zugrunde, dass die bei dem bisher benutzten Verfahren aufgetretenen Probleme vermieden werden können, wenn die Stützstangen nicht direkt in die Unterseite des Fundamentsegmentes eingeschraubt werden, sondern wenn an dem Fundamentsegment verteilt Stützstangen mittels je eines Stützfußes, z.B. in Form einer Abstützplatte, fest angebracht sind, bevor das Fundamentsegment auf der Sauberkeitsschicht abgestellt wird. Die Mittel zur Höhenverstellung sind weiterhin an den Stützstangen vorgesehen, jedoch an anderer Stelle als bisher, und die Höheverstellung wird nicht durch unterschiedlich weites Hineinschrauben der Stützstangen in die Unterseite des Fundamentsegmentes erreicht. Durch die Stützfüße wird eine wesentlich größere Auflagetläche für das Fundamentsegment auf den Stützstangen und somit eine wesentlich bessere Lastverteilung erreicht. Das Abknicken einer Gewindestange an der Unterseite des Fundamentsegmentes kann somit nicht mehr auftreten.

Um auch ein Einbrechen der Stützstange in die Sauberkeitsschicht zu verhindern ist weiterhin erfindungsgemäß vorgesehen, dass die Stellen, an denen die Stützstangen mit dem Fundamentsegment auf der Sauberkeitsschicht abgestellt werden sollen, verstärkt werden. Diese Verstärkung kann flächig durch den Einbau von (zusätzlichen) Bewehrungsmatten und/oder durch lokale Verstärkung, beispielsweise durch Erhöhung der Sauberkeitsschicht an vorgegebenen Positionen, erfolgen. Eine Alternative dazu oder eine Ergänzung ist die Verwendung von Fußplatten. Diese können an vorgegebenen Positionen auf der Sauberkeitsschicht abgelegt werden, so dass die Stützstangen darauf abgestellt werden können, oder sie sind an der Stützstange an der dem Stützfuß gegenüberliegenden Seite angebracht.

Nachdem das Fundamentsegment mit den Stützstangen auf diesen Stützpunkten bzw. Fußplatten abgestellt wurde und der Höhenausgleich erfolgt ist, wird schließlich das restliche Fundamentbett in einem oder mehreren Gießgängen mit Fundamentmasse, beispielsweise Beton, ausgefüllt, wobei die Fundamentmasse bis über den unteren Rand des Fundamentsegmentes hinaus aufgefüllt wird, so dass ein stabiles Fundament erreicht wird. Bei diesem abschließenden Gießvorgang treten ebenfalls bei dem bekannten Verfahren vereinzelt beobachtete Probleme, insbesondere Veränderungen der Lage des Fundamentsegmentes während des Auffüllens mit Fundamentmasse, aufgrund der stabilen Abstützung des Fundamentsegmentes nicht mehr auf.

In einer bevorzugten Ausgestaltung ist vorgesehen, dass die Stützstangen mittels Abstützplatten an einem an der Unterseite des Fundamentsegmentes angebrachten Flansch angebracht werden. Bevorzugt werden die Abstützplatten mit dem Flansch verschraubt. Dadurch kann eine besonders gute Auflage und Abstützung des Fundamentsegmentes auf den Stützstangen erreicht werden.

In einer alternativen Ausgestaltung ist vorgesehen, dass die Stützstangen jeweils an einem am oberen Rand des Fundamentsegments verlaufenden Flansch angebracht werden. Bevorzugt ist dazu der Stützfuß am oberen Ende der Stützstange so ausgestaltet, dass er fest mit dem Flansch verbunden, beispielsweise verschraubt werden kann. Um ein sicheres Abstützen des Fundamentsegments zu gewährleisten, ist bei einer derartigen Ausgestaltung weiter bevorzugt vorgesehen, dass die Stützstangen durch am unteren Rand des Fundamentsegments angebrachte Ösen hindurchgeführt werden und innerhalb des Fundamentsegments verlaufen.

Das Aufgießen des Fundamentbettes mit Fundamentmasse im letzten Verfahrensschritt kann in einem einzigen Gießvorgang erfolgen. Bevorzugt kann, insbesondere bei der zuletzt beschriebenen Ausgestaltung der Stützstangen, das Aufgießen des restlichen Fundamentbetts auch in zwei Schritten erfolgen. In einem ersten Schritt wird dabei das Fundamentbett zunächst etwa bis zum unteren Rand des Fundamentsegments mit Fundamentmasse aufgegossen. Danach kann nochmals eine eventuelle Höhenjustierung des Fundamentsegments vorgenommen werden, um auch eventuelle Lageveränderungen des Fundamentsegments bei diesem ersten Aufgießen auszugleichen und eine möglichst horizontale Lage zu erreichen. Dazu weisen die Stützstangen natürlich die Höhenverstellmittel in einem Bereich auf, der zu diesem Zeitpunkt noch nicht mit Fundamentmasse aufgegossen ist Erst nach dieser Höhenjustierung wird schließlich dann das restliche Fundamentbett bis zu der gewünschten Höhe aufgegossen.

In einer weiteren Ausgestaltung ist erfindungsgemäß vorgesehen, dass das Aufgießen des restlichen Fundamentbetts mit Fundamentmasse bis zu einer solchen Höhe erfolgt, dass in den Seitenwänden des Fundamentsegmentes vorgesehene Löcher von Fundamentmasse überdeckt werden, wobei die Fundamentmasse auch in den hohlen Innenraum des Fundamentsegmentes eingegossen wird.

Bevorzugt ist in dem Fundamentsegment eine umlaufende Lochreihe in gleichbleibenden Abstand von der Unterseite des Fundamentsegmentes vorgesehen. Durch die Löcher werden Bewehrungsdrähte geflochten, so dass sich eine mechanische Verbindung zwischen dem Fundament und der Fundamentsektion ergibt.

Die Fundamentmasse wird also nicht nur in den Umgebungsbereich des Fundamentsegmentes in das Fundamentbett eingegossen, sondern auch in den Innenraum des hohlen Fundamentsegmentes, damit dieses keinen seitlichen Belastungen aufgrund der in den Außenraum eingegossenen Fundamentmasse ausgesetzt wird, was wiederum zu Lageveränderungen des Fundamentsegmentes während des Eingießvorganges führen könnte. Dadurch, dass Fundamentmasse auch in den Innenraum des Fundamentsegmentes eingegossen wird, wird dieses in einer Lage stabilisiert und kann nicht so leicht durch im Außenbereich eingegossene Fundamentmasse verkippt oder in seiner Lage verändert werden.

Bevorzugt ist die Höhenverstellung der Stützstangen am unteren, der Sauberkeitsschicht zuweisenden Ende der Stützstangen vorgesehen. Diese könnte beispielsweise durch eine verstellbare Mutter realisiert sein. Die Stützstange selbst weist bevorzugt eine innenliegende Gewindestange auf, mittels der die Höhenverstellung erfolgen kann.

In einer vorteilhaften Ausgestaltung des erfindungsgemäßen Verfahrens ist eine Messung der aktuellen Höheneinstellung der einzelnen Stützfüße vorgesehen. Vorzugsweise werden dazu optische Messmittel, wie beispielsweise ein einen in horizontaler Richtung fokussierten Laserstrahl aussendendes Messmittel, vorgesehen, wobei an den Stützfüßen entsprechende Sensoren angebracht sind. Diese erzeugen ein Sensorsignal, das eine Information darüber enthält, wie die aktuelle. Höheneinstellung des Stützfußes ist und somit eine Höheneinstellung erlaubt, so dass das Fundamentsegment horizontal ausgerichtet ist. Außerdem können auch gesteuerte Antriebsmittel zur Höheneinstellung der Stützfüße vorgesehen sein, die abhängig von den ermittelten Sensorsignalen die Höheneinstellung der Stützfüße automatisch vornehmen.

Bevorzugt bei dem erfindungsgemäßen Verfahren verwendbare, erfindungsgemäße Stützstangen sind in den Ansprüchen 1 bis 5 angegeben. Ein erfindungsgemäßes Fundamentsegment mit den beschriebenen Merkmalen ist in den Ansprüchen 17 und 18 angegeben. Die Erfindung betrifft darüber hinaus auch eine Windenergieanlage mit einem mehrere Segmente aufweisenden Turm, wobei das unterste Segment ein Fundamentsegment der beschriebenen Art ist bzw. wobei das Fundament des Turmes mit dem beschriebenen Verfahren hergestellt ist.

### Die Erfindung wird nachfolgend anhand von Zeichnungen erläutert. Es zeigen:

- Fig. 1: eine erfindungsgemäße Windenergieanlage mit einem aus mehreren Segmenten bestehenden Turm;
- Fig. 2: eine erste Ausgestaltung eines erfindungsgemäßen Fundamentsegments;
- Fig. 3: einen Ausschnitt des erfindungsgemäßen Fundamentsegmentes gemäß Fig. 2 mit einer Stützstange;
- Fig. 4: eine zweite Ausgestaltung eines erfindungsgemäßen Fundamentsegments;
- Fig. 5: eine Schnittdarstellung des Fundamentsegments gemäß Fig. 4 mit einer Stützstange;
- Fig. 6: einen Ausschnitt des erfindungsgemäßen Fundamentsegments gemäß Fig. 5;
- Fig. 7: einen weiteren Ausschnitt des erfindungsgemäßen Fundamentsegments gemäß Fig. 5;
- Fig. 8: einen Stützfuß einer in Fig. 5 gezeigten Stützstange;
- Fig. 9: eine Vorderansicht einer weiteren Ausgestaltung einer erfindungsgemäßen Stützstange;
- Fig. 10: eine Seitenansicht der Stützstange gemäß Fig. 9;
- Fig. 11: eine Seitenansicht einer weiteren Ausgestaltung einer erfindungsgemäßen Stützstange mit einem Antrieb;
- Fig. 12: eine Vorderansicht einer weiteren Ausgestaltung einer erfindungsgemäßen Stützstange mit einem Sensor zur Höheneinstellung;
- Fig. 13: eine Draufsicht auf ein erfindungsgemäßes Fundamentsegment zur Erläuterung der Erzeugung von Sensorsignalen zur Höheneinstellung; und
- Fig. 14: ein Blockschaltbild eines bei einer Ausgestaltung der Stützstangen vorgesehenen Sensors zur Höheneinstellung.

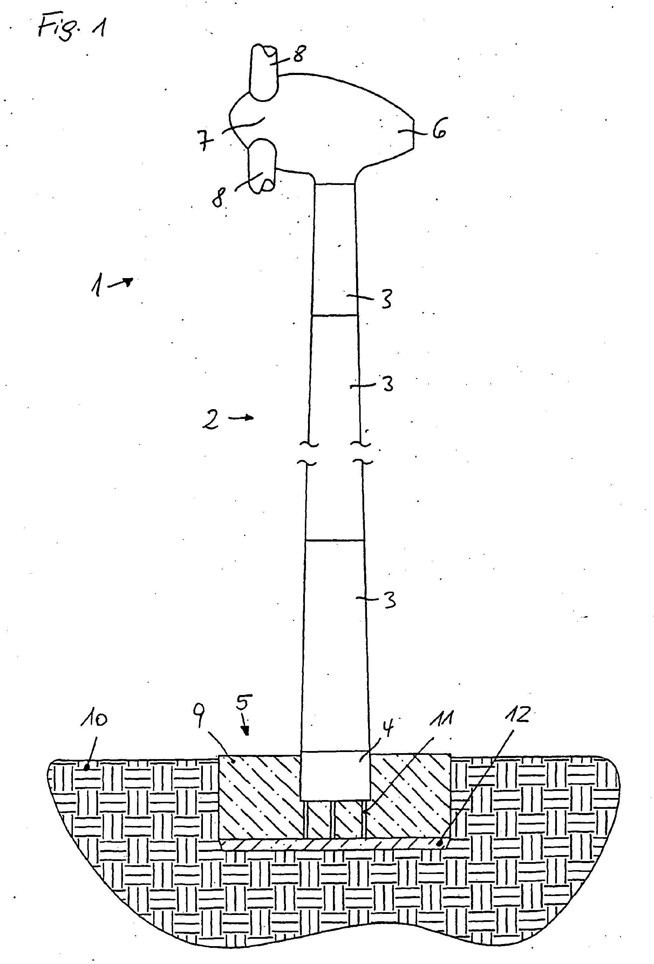

Die in Fig. 1 schematisch dargestellte Windenergieanlage 1 weist einen mehrere Segmente 3 aufweisenden Turm 2 auf, wobei das unterste Segment 4, das sogenannte Fundamentsegment, in ein Fundament 5 eingebettet ist. Oben an dem Turm 2 ist eine Gondel 6 drehbar gelagert, an der wiederum ein Rotor 7 mit mehreren Rotorblättern 8 angebracht ist. Innerhalb der Gondel 6 ist ein elektrischer Generator angeordnet, der durch die auf die Rotorblätter 8 wirkenden Windkräfte in Drehung versetzt wird und somit elektrische Energie erzeugt.

Die Segmente 3 einschließlich des Fundamentsegments 4 des Turmes 2 sind bevorzugt Stahlelemente, können jedoch grundsätzlich auch Spannbetonelemente sein, in die beispielsweise Spannstahlelemente bzw. Anker eingegossen sind. Das Fundamentsegment 4 ist demnach in eine Fundamentplatte 9 eingegossen, die bevorzugt aus Beton besteht. Diese Fundamentplatte 9 kann sowohl über den umgebenden Bereich des Bodens 10 hinausreichen oder auch ebenerdig abschließen, überdeckt aber jedenfalls den unteren Rand des Fundamentsegmentes 4 sowie die an der Unterseite des Fundamentsegmentes 4 angebrachten Stützstangen 11. Mittels dieser Stützstangen 11 ist das Fundamentsegment auf einer sogenannten Sauberkeitsschicht 12, also einer möglichst ebenen und horizontal verlaufenden Zement- oder Betonschicht, abgestützt, die in das Fundamentbett eingegossen wird, bevor das Fundamentsegment 4 mit den Stützstangen 11 aufgestellt wird.

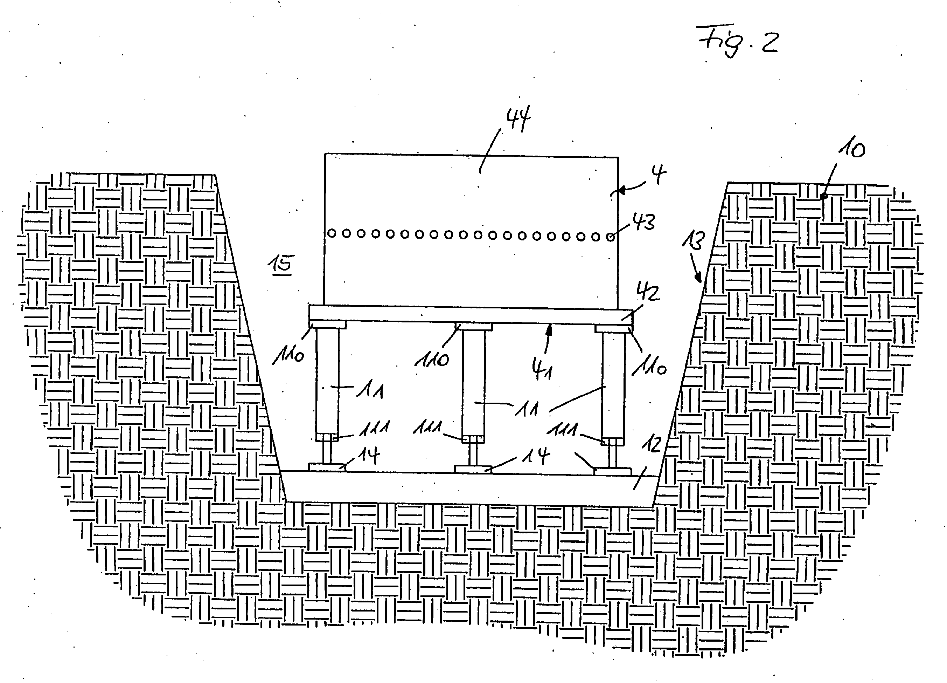

In Figur 2 sind die wesentlichen Elemente des Fundaments 5 vor dem Aufgießen der Fundamentmasse zur Bildung der Fundamentplatte 9 gezeigt. Zur Erstellung des Fundaments wird zunächst ein Fundamentbett 13 aus dem Erdboden 10 ausgehoben. Danach wird auf den Boden des Fundamentbetts eine Sauberkeitsschicht 12 eingebracht, deren Oberfläche möglichst eben und horizontal verlaufen soll. Bevor das Fundamentsegment 4 auf der Sauberkeitsschicht 12 abgestellt wird, werden zunächst an der Unterseite 41 des Fundamentsegmentes 4 drei Stützstangen 11 fest angebracht. Um eine möglichst gleichmäßige Lastverteilung und eine möglichst gute Auflage des Fundamentsegmentes auf den Stützstangen 11 zu erreichen, weisen diese am oberen, der Unterseite des Fundamentsegmerites 4 zuweisenden Ende jeweils fest angebracht als Stützfuß eine Abstützplatte 110 auf, mittels der die Stützstangen 11 an einem Flansch 42 des Fundamentsegmentes angebracht, bevorzugt fest verschraubt, werden. Die Stützstangen 11 sind außerdem gleichmäßig beabstandet oder an vorgegebenen Positionen am Umfang des zylindrischen Fundamentsegmentes 4 angeordnet. Vor dem Abstellen des Fundamentsegmentes 4 werden Stützpunkte 14 auf der Sauberkeitsschicht 12 markiert und mit Fußplatten verstärkt, um ein Einbrechen der Stützstangen 11 in die Sauberkeitsschicht 12 zu verhindern. Nachdem nun das Fundamentsegment 4 auf den Fußplatten 14 abgestellt ist, kann mittels der Stützstangen 11 eine Höhenverstellung vorgenommen werden, um das Fundamentsegment 4 möglichst horizontal auszurichten. Dazu weisen die Stützstangen 11 Höhenverstellmittel 111 auf, die als innenliegende Gewindestange mit einer Versteitmutter ausgebildet sein können.

Nach Höhenausrichtung des Fundamentsegmentes 4 wird die Bewehrung hergestellt. Dabei werden Bewehrungsdrähte durch die in den Seitenwänden des Fundamentsegmentes 4 als Lochreihe 43 vorgesehen Löcher geflochten. Schließlich wird das Fundamentbett 13 vollständig mit Fundamentmasse, vorzugsweise Beton, ausgegossen. Dazu wird die Fundamentmasse einerseits in den Außenraum 15 des Fundamentsegmentes 4 als auch in den Innenraum 44 des Fundamentsegmentes 4 eingegossen, damit beim Eingießen der Fundamentmasse nicht die Lage des Fundamentsegmentes, beispielsweise aufgrund seitlicher Kräfte durch von außen einwirkende Fundamentmasse verändert wird. Da durch die Löcher der Lochreihe 43 Drähte der Fundament-Bewehrung geführt sind, können auch Zugkräfte vom Turm sicher in das Fundament übertragen werden. Nachdem das Fundamentsegment 4 somit fest eingegossen ist, kann der weitere Aufbau des Turms erfolgen.

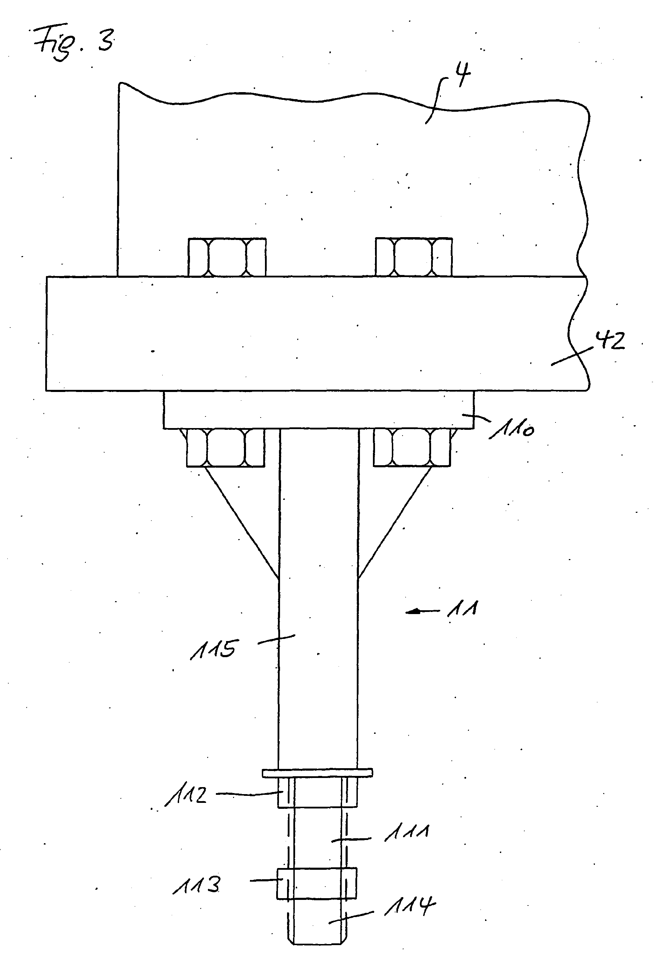

In Figur 3 ist ein Ausschnitt des Fundamentsegments 4 mit einer Stützstange 11 näher gezeigt. Darin ist erkennbar, wie die Stützstange 11 mittels der Abstützplatte 110, die fest mit der Stützstange 11 verbunden ist, an dem Flansch 42 des Fundamentsegments 4 angeschraubt ist. Zumindest im unteren Bereich der Stützstange 11 ist eine innenliegende Gewindestange 114 vorgesehen, auf der eine Verstellmutter 112 angebracht ist, um die Höhenverstellung vorzunehmen, also die Länge die Stützstange 11 zu verändern. Dabei stützt sich die Verstellmutter 112 an der äußeren Hülle der Stützstange 11 ab und erlaubt somit eine Verstellung der Gewindestange 114 in ihrer Längsrichtung. Die festsitzende Mutter 113 ermöglicht ein Festhalten der Gewindestange 114, so dass sich diese beim Drehen der Mutter 112 nicht mitdrehen kann.

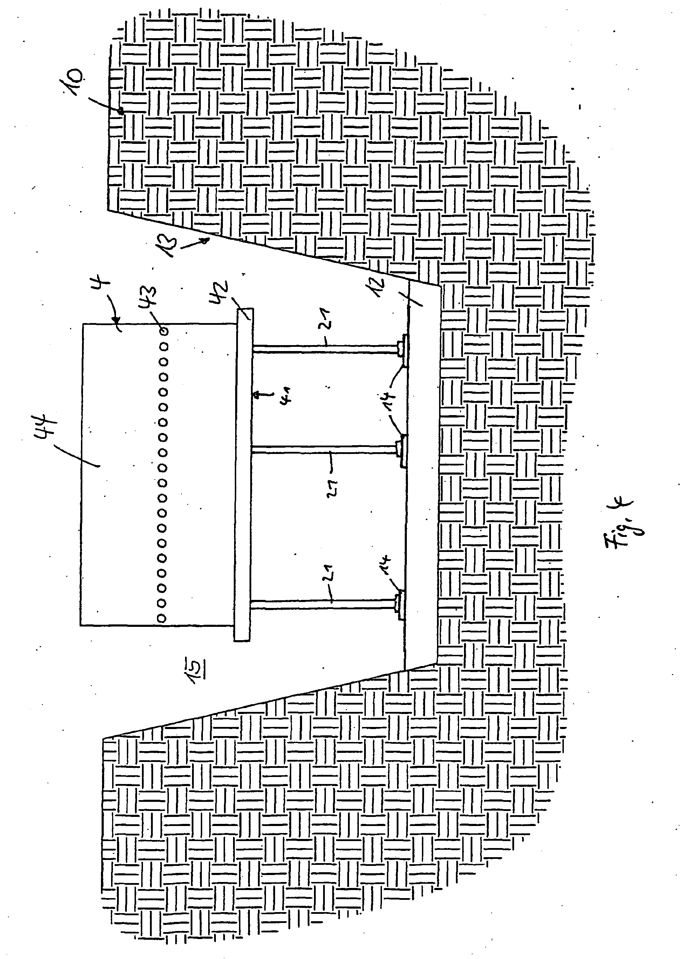

Fig. 4 zeigt eine alternative Ausgestaltung eines erfindungsgemäßen Fundamentsegments, bei dem insbesondere andere Stützstangen 21 Verwendung finden. Gezeigt ist wiederum das Fundamentsegment 4, das sich auf drei Stützstangen 21 abstützt. Zwischen der Sauberkeitsschicht 12 und den Stützstangen 21 sind wiederum Abstützplatten 14 vorgesehen, die zur Verteilung des Gewichtes dienen, um ein Einbrechen der Stützstangen 21 in die Sauberkeitsschicht 12 zu verhindern.

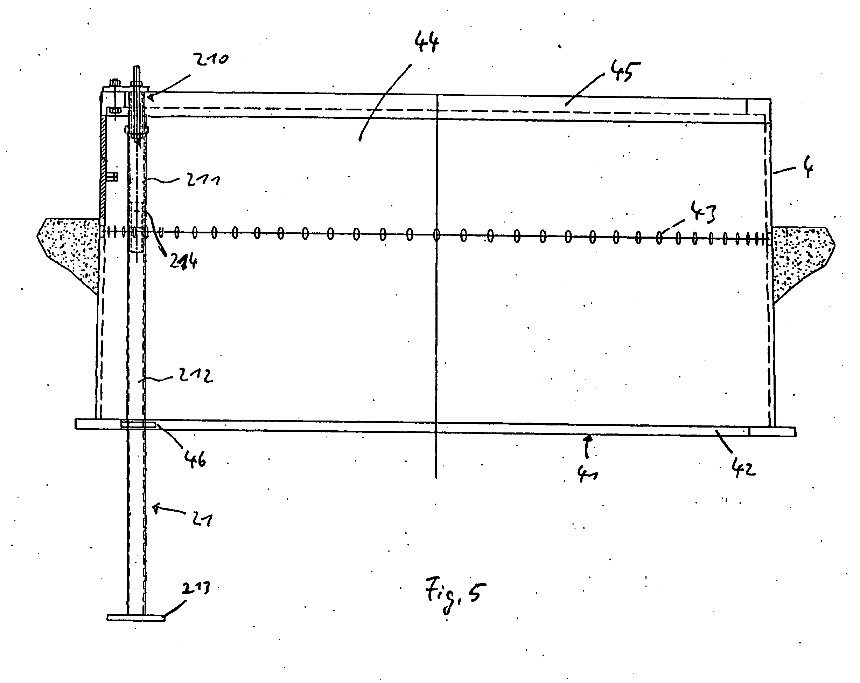

Die Stützstangen 21 verlaufen bei dieser Ausgestaltung im Innenraum 44 des Fundamentsegments 4 bis hin zu dessen oberen Rand, wie deutlich aus Fig. 5 zu erkennen ist. Dort ist ein Fundamentsegment 4 mit einer einzelnen Stützstange 21 im Querschnitt gezeigt. Die Stützstange 21 ist mehrteilig ausgestaltet und weist einen Stützfuß 210, ein Zwischenstück 211 und ein Endstück 212 mit einer Fußplatte 213 auf. Der Stützfuß 210 dient zur Befestigung der Stützstange 21 an dem oberen Flansch 45 des Fundamentsegments 4. Das Zwischenstück 211 ist einerseits mit dem Stützfuß 210 als auch mit dem Endstück 212 verbunden, beispielsweise über ein Gewinde im Bereich einer Stoßstelle 214 in das Endstück 212 eingeschraubt Die Stoßstelle 214 liegt dabei oberhalb der Lochreihe 43 in einer Höhe, die nach dem vollständigen Aufgießen des Fundamentbetts nicht mit Fundamentmasse bedeckt ist. Dadurch ist letztlich von der Stützstange 21 jeweils nur das Endstück 212 vollständig vergossen, während das Zwischenstück 211 und der Stützfuß 210 jeweils wiederverwendet werden können.

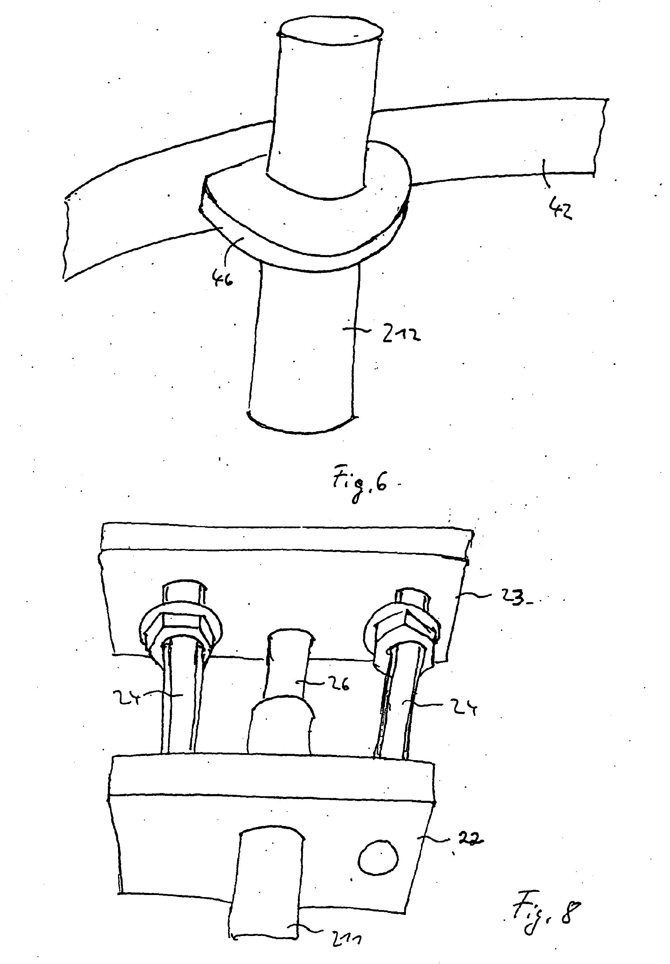

Zur besseren Abstützung des Fundamentsegments ist die Stützstange 21 durch eine am unteren Flansch 42 angebrachte Öse 46 geführt, wie auch aus Fig. 6 näher zu erkennen ist.

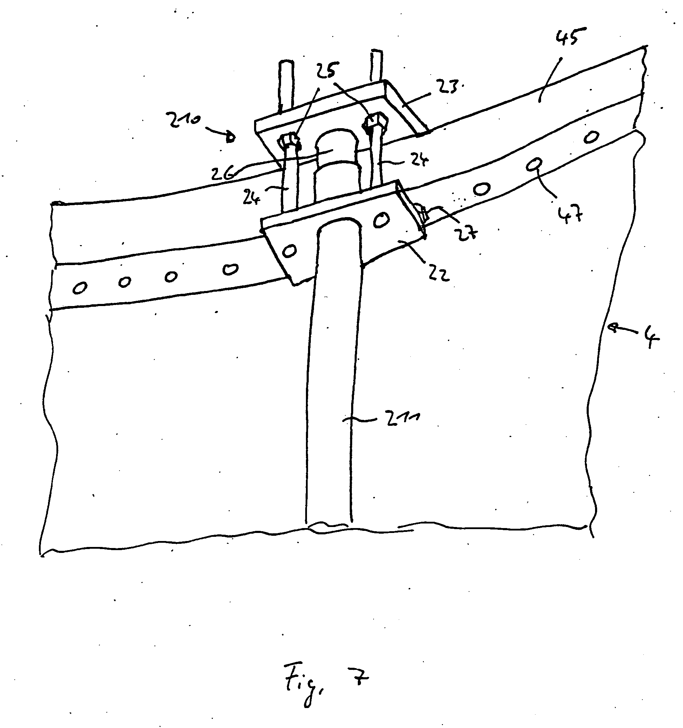

Fig. 7 zeigt den oberen Teil der Stützstange, also einen Teil des Zwischenstücks 211 sowie den Stützfuß 210. Der Stützfuß 210 umfasst dabei mehrere Teile zur Befestigung der Stützstange 21 an dem oberen Flansch 45 des Fundamentsegments 4 sowie zur Höhenverstellung bzw. Höhenjustierung während der Erstellung des Fundamentes. Oberhalb und unterhalb des umlaufenden Flansches 45 befinden sich jeweils eine Platte 22, 23. Die untere Platte 22 verdeckt teilweise eine Schraube 27, die durch das Lochbild 47 in dem oberen Flansch 45 hindurchgreift und die obere Platte 23 des Stützfußes 210 mit dem Fundamentsegment 4 verbindet. Innerhalb des Fundamentsegmentes 4 verlaufen weiterhin zwei Gewindestangen 24 zwischen den beiden Platten 22, 23, die mittels Muttern 25 eine Verstellung der Position der oberen Platte 23 gegenüber dem restlichen Teil des Stützfußes 210 erlauben. Dabei gleitet eine an der oberen Platte 23 befestigte Stange 26 in dem als äußeres Rohr dienenden Zwischenstück 211. Da das Fundamentsegment 4 mit der oberen Platte 23 verbunden ist, wird somit bei einer Veränderung der Position der oberen Platte 23 auch das gesamte Fundamentsegment 4 relativ zu der Sauberkeitsschicht 12 bewegt.

Die Verstellung der oberen Platte 23 kann beispielsweise derart erfolgen, dass das Fundamentsegment 4 mit einem entsprechenden Hebegerät, z.B. einem Kran, angehoben wird. Sodann können die unterhalb der oberen Platte 23 erkennbaren Muttern 25 (s. auch Fig. 8) verstellt werden, bis die gewünschte Position erreicht ist. Nach dem Verstellen kann das Fundamentsegment 4 wieder abgesenkt werden und befindet sich somit in der gewünschten Position. Dadurch kann während der Erstellung des Fundaments auf einfache Weise eine Höhenverstellung bzw. Höhenjustierung des Fundamentsegmentes erreicht werden.

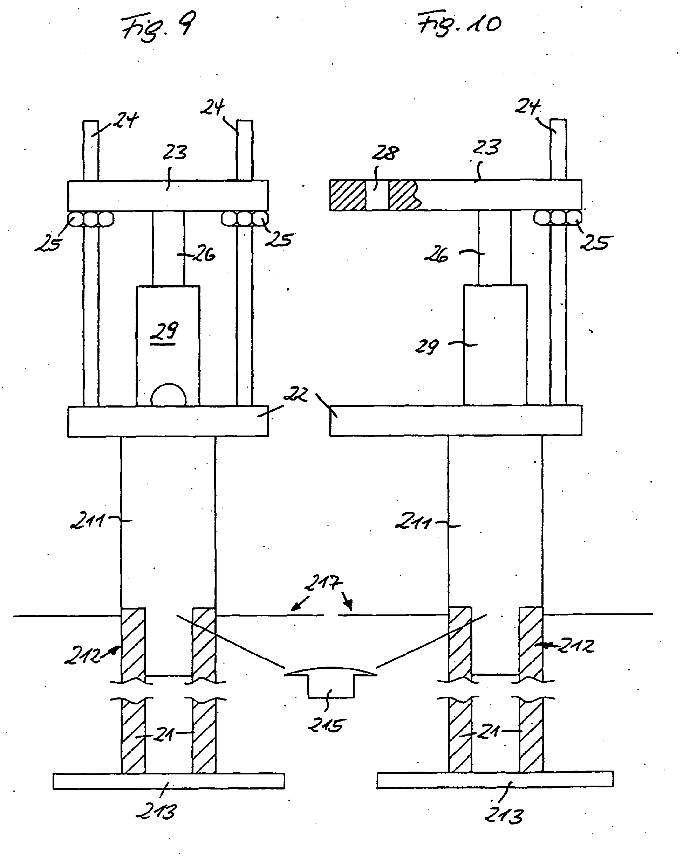

Eine weitere Ausgestaltung einer erfindungsgemäßen Stützstange ist in einer Vorderansicht und einer Seitenansicht in den Figuren 9 und 10 dargestellt. Nach wie vor ist das Endstück 212, wie in Fig. 5 gezeigt, in einer Öse am unteren Rand der Fundamensektion geführt. Unverändert ist auch, dass dieses Endstück in dem Fundament eingegossen ist und nicht wiederverwendet.wird. Dabei wird das Fundament bis zu einer Höhe aufgegossen, die in diesen Figuren durch eine Linie 217 angedeutet ist. Um das Eindringen von Feuchtigkeit zu vermeiden, sind Kappen 215 vorgesehen, die nach dem Entfernen des wiederverwendbaren Teiles der Stützstange aus den Endstücken 212 zum Abdecken der dann offenen Enden verwendet werden.

Auch der obere Teil dieser Stützstange ist weitgehend gleich wie bei der vorstehend beschriebenen Stützstange. So finden sich zwei Platten 22, 23, zwischen denen Gewindestangen 24 mit Muttern angeordnet sind. In der Vorderansicht in Fig. 9 sind zwei Gewindestangen 24 mit Muttern 25 erkennbar, in der Seitenansicht in Fig. 10 liegen diese fluchtend hintereinander, weshalb nur eine Gewindestange 24 mit einer Mutter 25 erkennbar ist. In Fig. 10 ist weiterhin ein Teil der oberen Platte 23 aufgebrochen und zeigt eine Durchgangsbohrung 28. Durch diese Durchgangsbohrung 28 kann die Platte 23 und damit die Stützstange mit dem oberen Flansch der Fundamentsektion verbunden werden.

Um nun die Höhenverstellung zu vereinfachen und den Anteil manueller Arbeit weiter zu verringern, ist zwischen den beiden Platten 22, 23 weiterhin eine Anordnung mit einem Teleskop-Zylinder 29 und eine Teleskop-Stange 26 vorgesehen. Dieser Zylinder kann z.B. pneumatisch oder hydraulisch betätigt werden und gestattet damit ein einfaches Einstellen der mit der Stützstange verbundenen Fundamentsektion. Die Gewindestange 24 und die Mutter 25 dienen bei dieser Ausführungsform einerseits zum Fixieren der zunächst hydraulisch oder pneumatisch eingestellten Position und andererseits als "Notbetätigung", um auch bei Ausfall der Hydraulik bzw. Pneumatik die Fundamentsektion noch manuell einstellen zu können.

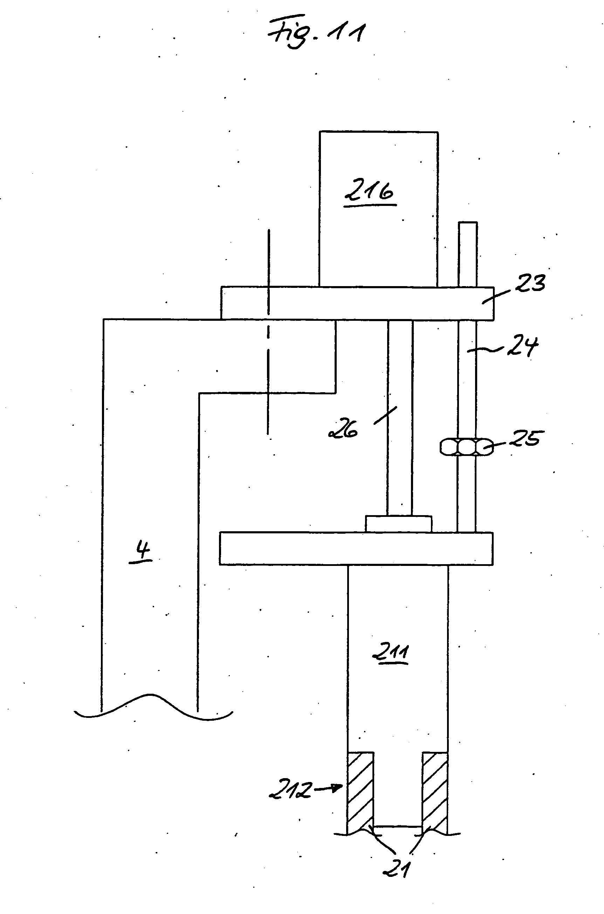

In Fig. 11 ist zur Verbesserung der Übersicht nur der obere Abschnitt einer erfindungsgemäßen Stützstange bis zu dem Übergang in das Endstück 212 gezeigt. In dieser Figur ist zusätzlich die Fundamentsektion 4 angedeutet Diese ist mit der oberen Platte 23 verbunden. Weiterhin kann die Stange 26 als Gewindestange ausgeführt sein, die an ihrem unteren Ende drehbar gelagert ist und von einem Antrieb 216 gedreht wird, so dass die Platte 23 mit einem passenden Gewinde abhängig von der Drehrichtung vertikal verfahren werden kann. Damit verändert sich auch die vertikale Position des mit der oberen Platte verbundenen Fundamentsegmentes 4. Die Steuerung für solche Antriebe wie Elektromotoren ebenso wie Steuerungen für die in den Figuren 9 und 10 dargestellten Zylinder 26, 29 sind bekannt, weshalb auf eine nähere Beschreibung hier verzichtet wird.

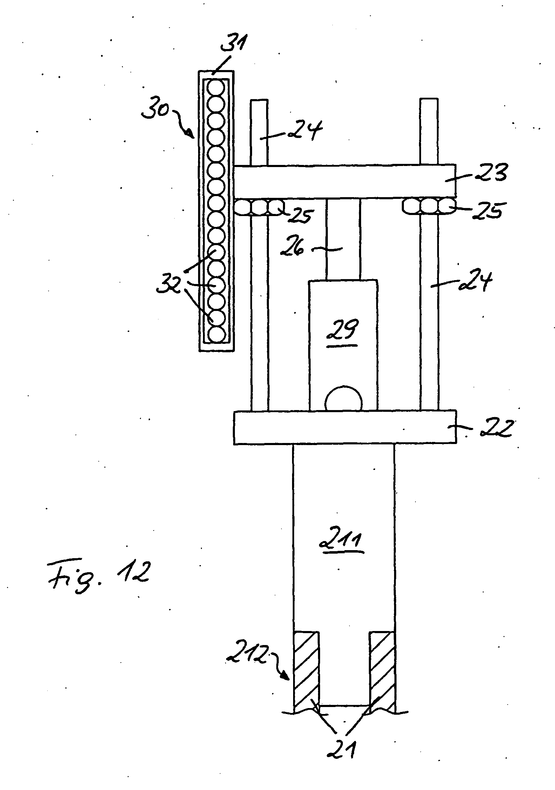

Fig. 12 zeigt eine weitere Ausführungsform einer erfindungsgemäßen Stützstange, die eine selbsttätige Einstellung des Stützfußes in einer vorgebbaren Position erlaubt. Auch in dieser Figur ist zur besseren Übersicht nur der obere Abschnitt der erfindungsgemäßen Stützstange dargestellt. Dieser gleicht dem Aufbau im wesentlichen der in den Figuren 9 und 10 dargestellten Variante.

Ergänzend zu der Darstellung gemäß den Figuren 9 und 10 ist hier aber ein Sensor 30 vorgesehen. Dieser weist mehrere in einem Gehäuse 31 angeordnete lichtempfindliche Elemente 32 wie Fototransistoren, Fotowiderstände oder dergleichen auf. Ergänzend können auch Filter vorgesehen sein, oder die lichtempfindlichen Elemente 32 können derart ausgebildet sein, dass sie nur auf ein vorgegebenes Spektrum reagieren, um die Einflüsse von Streulicht und Tageslicht zu verringern bzw. vollständig zu unterbinden.

Wird also eine Lichtquelle in einer vorgegebenen horizontalen Position vorgesehen, trifft abhängig von der Ausrichtung dieser Lichtquelle einerseits und der Einstellung des Stützfußes andererseits das Licht von dieser Lichtquelle auf die lichtempfindlichen Elemente 32 auf. Wenn dieses Licht nun ausreichend fokussiert ist, werden nur einige lichtempfindliche Elemente 32 von dem Licht getroffen. Daraus lässt sich die Höheneinstellposition des entsprechenden Stützfußes relativ zu der Lichtquelle ableiten. Wenn sich also der Sensor 30 in einer eindeutig definierten Position befindet und auch die Lichtquelle eine eindeutig definierte Position hat, lässt sich beispielsweise aus der Abweichung des auftreffenden Lichtstrahles von einer vorgegebenen Position in dem Sensor 30, wie z.B. dessen Mitte, eine Stellgröße ableiten, die zur Veränderung der Höheneinstellung des Stützfußes verwendet werden kann. Auf diese Weise kann eine automatische Ausrichtung der Fundamentsektion erfolgen.

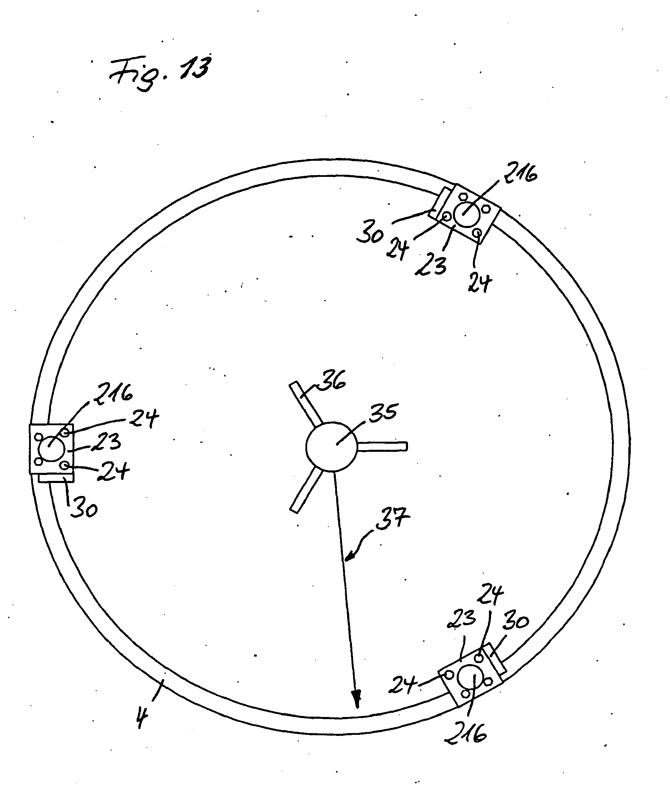

Ein Beispiel der Anordnung dafür ist in Fig. 13 dargestellt. Dort ist eine Fundamensektion 4 in einer Draufsicht gezeigt, an deren Innenseite um 120° zueinander versetzt drei erfindungsgemäße Stützstangen angeordnet sind. Wesentlich ist bei dieser Anordnung, dass sich die Ausrichtung dieser Fundamensektion an dem oberen Flansch orientiert, da diese exakt horizontal ausgerichtet sein muss, während die Ausrichtung des unteren Flansches der Fundamentsektion aus leicht nachvollziehbaren Gründen unerheblich ist. Im Zentrurn der Fundamentsektion 4 ist eine Lichtquelle 35 z.B. auf einem Stativ 36 aufgestellt und exakt horizontal ausgerichtet. Diese Lichtquelle 35 kann z.B. einen Laserstrahl 37 aussenden, dessen Licht auch in größerer Entfernung noch ausreichend gebündelt ist und der um 360° in der Fundamentsektion umläuft.

Jeder der drei Stützfüße ist mit seiner oberen Platte 23 dargestellt, die mit der Fundamentsektion 4 fest verbunden ist. Weiterhin sind die Gewindestangen 24 sowie der Antrieb 216 und der Sensor 30 dargestellt. Wenn der Laserstrahl 37 nun exakt horizontal umläuft, wird an jedem Sensor 30 ein Signal erzeugt, das einen Hinweis darauf gibt, ob der Stützfuß an dieser Stelle in der gewünschten Position ist oder durch Betätigen des Antriebes 216 bzw. manuell verstellt werden muss.

In der Praxis wird die Höheneinstellung der Stützfüße bevorzugt derart erfolgen, dass zunächst einer der Stützfüße in eine vorgegebene Position gebracht wird, dass dieser Stützfuß dann unverändert belassen wird und die Ausrichtung der Fundamentsektion 4 dann über die beiden anderen Stützfüße vorgenommen wird.

Dabei kann der Sensor 30 über sein Ausgangssignal natürlich den Antrieb 216 direkt beeinflussen. Andererseits kann aber auch eine zentrale Steuerung vorgesehen sein, welche das Sensorsignal auswertet und entsprechende Signale zur Betätigung des jeweils zugeordneten Antriebs 216 ausgibt.

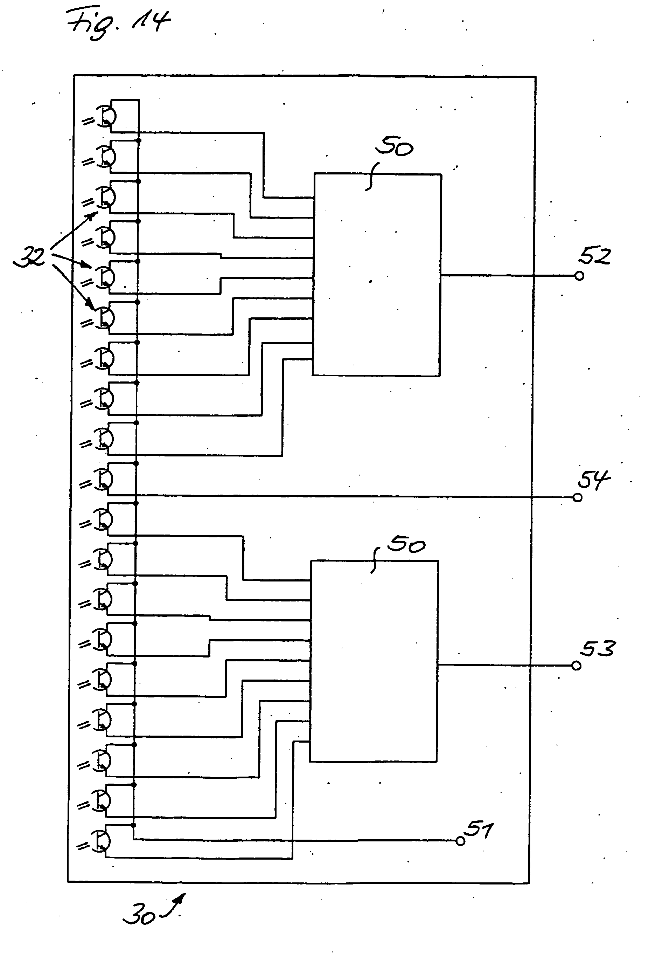

Fig. 14 zeigt vereinfacht ein Beispiel eines Sensors 30. Bei diesem Sensor 30 sind lichtempfindliche Sensorelemente 32 nebeneinander bzw. übereinander angeordnet. Zur Veranschaulichung sind diese Sensorelemente 32 hier als Fototransistoren dargestellt Die äußere Beschattung der Transistoren wurde dabei der besseren Übersicht wegen weggelassen, ist dem Fachmann aber ohne weiteres geläufig. Die Kollektoren dieser Fototransistoren 32 sind an einen Anschluss 51 zur Stromversorgung parallel angeschlossen.

Abhängig von der Lage des Transistors in diesem Sensor sind die Emitter der Transistoren an Verknüpfungen angeschlossen oder bilden einen Signaläusgang. Die Emitter der in dieser Figur dargestellten oberen neun Transistoren sind mit den Eingangsanschlüssen einer Oder-Verlcnüpfung 50 verbunden. Der Ausgang dieser Verknüpfung 50 steht als Signalausgang 52 zur Verfügung. Die Emitter der in dieser Figur dargestellten unteren neuen Fototransistoren sind ebenfalls mit Eingangsanschlüssen einer Oder-Verknüpfung 50 verbunden, und deren Ausgang 53 steht ebenfalls als ein Signalausgang zur Verfügung. Der Ausgang des mittleren Fototransistors steht direkt als Signalausgang 54 zur Verfügung. Natürlich können sämtliche Ausgänge auch über Verstärkungsstufen geführt sein.

Wird der Sensor 30 so eingebaut, dass die gewünschte horizontale Position dann erreicht ist, wenn der mittlere Transistor beleuchtet wird, lässt sich daraus ohne weiteres ableiten, dass dann, wenn Licht auf einen der Fototransistoren oberhalb dieses mittleren Transistors auftrifft, der Sensor und damit der Stützfuß noch zu tief eingestellt sind. Durch die Verknüpfung 50 erscheint am Ausgang 52 ein Signal, das eine Verstellung des Stützfußes und damit des Sensors nach oben auslöst. Trifft das einfallende Licht auf einen Fototransistor unterhalb des mittleren Fototransistors, ist daraus ableitbar, dass der Stützfuß tiefer eingestellt werden muss. Sobald der mittlere Fototransistor über den Anschluss 54 ein Signal ausgibt, kann dieses als "Stop"-Signal verwendet werden, um die Verstellung des Stützfußes zu beenden.

Da die absolute Höhe, z.B. über NN, für den oberen Flansch der Fundamentsektion nicht streng vorgeschrieben ist, kommt auch eine alternative Vorgehensweise für die Ausrichtung der Fundamensektion in Betracht. Dabei wird zunächst einer der Stützfüße auf eine gewünschte Höhe eingestellt Der umlaufende Lichtstrahl wird also eines der lichtempfindlichen Elemente 32 treffen. Dieser Sensor gibt ein Sensorsignal aus, welches einen Rückschluss auf das von dem umlaufenden Lichtstrahl getroffene lichtempfindliche Element 32 zulässt und damit die Einstellhöhe des Stützfußes repräsentiert. Ein solches Signal kann ein analoges Signal, aber auch ein digitales Signal, wie z.B. ein binär kodiertes Signal sein. Dieses Signal kann z.B. zu einer zentralen Steuerung geführt werden. Wenn nun die beiden noch einzustellen Stützfüße solange verstellt werden, bis jeder der zugeordneten Sensoren das gleiche Signal zu dieser zentralen Steuerung ausgibt, bis also das gleiche Sensorelement von dem Lichtstrahl getroffen ist, ist eine horizontale Ausrichtung der Fundamentsektion ebenfalls verwirklicht.

Natürlich sind auch andere Ausgestaltungen der Sensoren und eine andere Art der Einstellung der Stützfüße möglich. Beispielsweise ist in einer Ausgestaltung vorgesehen, dass an jedem Stützfuß in der gleichen Höhenposition ein reflektierendes Element angeordnet ist, das einen auftreffenden Lichtstrahl reflektiert. Im Zentrum der Fundamentsektion ist dann nicht nur die Lichtquelle, sondern auch ein entsprechender Empfänger angeordnet. Nur dann, wenn der Lichtstrahl auf die reflektierenden Elemente trifft, wird also von dem Empfänger ein reflektierter Lichtstrahl empfangen, was die korrekte Höheneinstellung signalisiert.

Die Erfindung ist nicht auf die Verwendung bei Windenergieanlagen beschränkt, sondern kann grundsätzlich bei jeder Art von Bauwerk, das mindestens zwei Segmente aufweist, zur Erstellung eines stabilen Fundamentes angewendet werden. Auch die Anzahl, die Anordnung und konkrete Ausgestaltung der in den Figuren gezeigten Elemente, insbesondere der Stützstangen, können variiert werden.

## Patentansprüche

1. Stützstange zur Verwendung bei einem Verfahren zur Erstellung eines Fundamentes für ein mehrere Segmente aufweisendes Bauwerk, insbesondere für einen Turm einer Windenergieanlage,
**gekennzeichnet durch** ein äußeres Rohr (211) und einem Stützfuß (210) an einem Ende der Stützstange (21), wobei der Stützfuß (210) eine in dem äußeren Rohr (211) verschiebbare Stange (26), eine erste, an dem äußeren Rohr (211) angebrachte Platte (22) und eine zweite, an der Stange (26) angebrachte Platte (23) aufweist, die mittels mindestens einer Gewindestange (24) zur Veränderung des Abstandes zwischen den beiden Platten (22, 23) verbunden sind, und wobei die zweite Platte (23) zur festen Verbindung mit einem abzustützenden Element (4) ausgestaltet ist.

2. Stützstange nach Anspruch 1,
**gekennzeichnet durch** eine Fußplatte (213) an dem dem Stützfuß (210) gegenüberliegenden Ende der Stützstange (21).

3. Stützstange nach einem der Ansprüche 1 bis 2,
**gekennzeichnet durch** Antriebsmittel (216), insbesondere hydraulische oder pneumatische Antriebsmittel, zur Höheneinstellung der Stützfüße (110, 210).

4. Stützstange nach einem der Ansprüche 1 bis 3,
**gekennzeichnet durch** einen Sensor (30), insbesondere einen optischen Sensor, welcher an dem Stützfuß (110, 210) angeordnet ist, zum Empfang eines Sendesignals und zur Erzeugung eines eine Information über die Höheneinstellung des Stützfußes (110, 210) enthaltenden Sensorsignals.

5. Stützstange nach Anspruch 4,
**dadurch gekennzeichnet, dass** der Sensor (30) mehrere entlang der Längsrichtung der Stützstange angeordnete Sensorelemente (32) aufweist.

6. Verfahren zur Erstellung eines Fundamentes für ein mehrere Segmente aufweisendes Bauwerk, insbesondere für einen Turm (2) einer Windenergieanlage, mit den folgenden Schritten:
a) Ausheben eines Fundamentbetts (13),
b) Erstellung einer stabilen, im wesentlichen eben und horizontal verlaufenden Sauberkeitsschicht (12) in dem Fundamentbett (13),
c) Aufsetzen eines Fundamentsegmentes (4) des Bauwerkes auf der Sauberkeitsschicht (12), wobei an dem Fundamentsegment (4) verteilt mindestens drei höhenverstellbare Stützstangen (11, 21) nach einem der Ansprüche 1 bis 5 fest mittels jeweils eines am Ende der Stützstangen (11, 21) angebrachten Stützfußes (110) derart angebracht sind, dass nur die Stützstangen (11, 21) auf vorgegebenen Stützpunkten (14) der Sauberkeitsschicht (12) abgestellt werden,
d) Herstellen einer Bewehrung auf der Sauberkeitsschicht,
e) Aufgießen des restlichen Fundamentbetts mit Fundamentmasse, insbesondere Beton, bis über den unteren Rand des Fundamentsegments (4) hinaus.

7. Verfahren nach Anspruch 6,
**dadurch gekennzeichnet, dass** die Stützstangen (11) jeweils mittels Abstützplatten (110) an einem an der Unterseite (41) des Fundamentsegmentes (4) angeordneten Flansch (42) angebracht werden.

8. Verfahren nach einem der Ansprüche 6 bis 7,
**dadurch gekennzeichnet, dass** die Höhenverstellung der jeweils eine innenliegende Gewindestange (114) aufweisenden Stützstangen (11) mittels einer am unteren, der Sauberkeitsschicht (12) zuweisenden Ende der Stützstangen (11) angeordneten Höhenverstelleinrichtung erfolgt.

9. Verfahren nach Anspruch 6,
**dadurch gekennzeichnet, dass** die Stützstangen (21) jeweils an einem am oberen Rand des Fundamentsegments (4) verlaufenden Flansch (45) angebracht werden.

10. Verfahren nach Anspruch 9,
**dadurch gekennzeichnet, dass** die Stützstangen (21) durch am unteren Rand des Fundamentsegments (4) angebrachte Ösen (46) hindurchgeführt werden und innerhalb des Fundamentsegments (4) verlaufen.

11. Verfahren nach einem der Ansprüche 6 bis 10,
**dadurch gekennzeichnet, dass** zum Aufgießen des restlichen Fundamentbetts mit Fundamentmasse das Fundamentbett zunächst etwa bis zum unteren Rand des Fundamentsegments (4) aufgegossen wird, dass danach eine eventuelle Höhenjustierung des Fundamentsegments (4) vorgenommen wird und dass anschließend das restliche Fundamentbett aufgegossen wird.

12. Verfahren nach einem der Ansprüche 6 bis 11,
**dadurch gekennzeichnet, dass** die Stützpunkte (14) auf der Sauberkeitsschicht (12) mechanisch verstärkt werden.

13. Verfahren nach einem der Ansprüche 6 bis 12,
**dadurch gekennzeichnet, dass** die Bewehrung durch in den Seitenwänden des Fundamentsegmentes (4) vorgesehene Löcher (43) geflochten wird, und dass das Aufgießen des restlichen Fundamentbetts (13) mit Fundamentmasse bis zu einer solchen Höhe erfolgt, dass die Löcher (43) von Fundamentmasse überdeckt werden.

14. Verfahren nach einem der Ansprüche 6 bis 13,
**dadurch gekennzeichnet, dass** zur Höheneinstellung der Stützfüße (110, 210) eine Messung der aktuellen Höheneinstellung der einzelnen Stützfüße mittels entsprechender Messmittel, insbesondere optischer Messmittel, erfolgt.

15. Verfahren nach Anspruch 14,
**dadurch gekennzeichnet, dass** zur Höheneinstellung der Stützfüße (110, 210) von einer im Innenraum des Fundamentsegmentes (4) angeordneten Sendeeinrichtung (35), insbesondere einer Lichtquelle, in horizontaler Richtung ein Höhenmesssignal, insbesondere ein gebündelter Lichtstrahl (35), zu den mit einem entsprechenden Sensor (30), insbesondere einem optischen Sensor, ausgestatteten Stützfüßen (110, 210) ausgesendet wird, dass von den Sensoren (30) jeweils ein eine Information über die Höheneinstellung des entsprechenden Stützfußes (110, 210) enthaltendes Sensorsignal erzeugt wird und dass abhängig von dem erzeugten Sensorsignal die Höheneinstellung des zugehörigen Stützfußes (110, 210) erfolgt.

16. Verfahren nach Anspruch 15,
**dadurch gekennzeichnet, dass** die Höheneinstellung der Stützfüße (110, 210) mittels eines gesteuerten Antriebs (216) erfolgt, wobei zur Steuerung die von den Sensoren (30) erzeugten Sensorsignale ausgewertet werden.

17. Fundamentsegment für ein mehrere Segmente aufweisendes Bauwerk, insbesondere für einen Turm einer Windenergieanlage,
**dadurch gekennzeichnet, dass** an dem Fundamentsegment (4) verteilt mindestens drei höhenverstellbare Stützstangen (11, 21) nach einem der Ansprüche 1 bis 5 fest mittels jeweils eines am Ende der Stützstangen (11, 21) angebrachten Stützfußes (110, 210) angebracht sind zum Abstellen des Fundamentsegmentes (4) auf Stützpunkten (14) einer Sauberkeitsschicht (12) in einem Fundamentbett (13).

18. Fundamentsegment nach Anspruch 17,
**dadurch gekennzeichnet, dass** in den Seitenwänden des Fundamentsegmentes (4) Löcher, insbesondere eine umlaufende Lochreihe (43), vorgesehen sind zum Hindurchführen von Bewehrungsstahl zum Herstellen einer mechanischen Verbindung zwischen der Bewehrung und dem Fundamentsegment (4).

19. Windenergieanlage mit einem mehrere Segmente aufweisenden Turm (2), wobei das unterste Segment ein Fundamentsegment (4) nach Anspruch 17 oder 18 ist.

20. Windenergieanlage mit einem mehrere Segmente aufweisenden Turm, wobei das Fundament (5) des Turmes (2) nach einem Verfahren gemäß einem der Ansprüche 6 bis 16 hergestellt ist.

## Claims

1. Support rod for use in a method for building a foundation for a structure comprising a plurality of segments, especially for a tower of a wind power installation,
**characterised by** an outer pipe (211) and a support foot (210) at one end of the support rod (21), wherein the support foot (210) has a rod (26) which is displaceable in the outer pipe (211), a first plate (22) attached to the outer pipe (211) and a second plate (23) attached to the rod (26), which plates are connected by means of at least one threaded rod (24) for altering the distance between the two plates (22, 23), and wherein the second plate (23) is configured for fixed connection to an element (4) that is to be supported.

2. Support rod according to claim 1,
**characterised by** a foot plate (213) at the opposite end of the support rod (21) from the support foot (210).

3. Support rod according to one of claims 1 to 2,
**characterised by** drive means (216), especially hydraulic or pneumatic drive means, for setting the height of the support feet (110, 210).

4. Support rod according to any one of claims 1 to 3,
**characterised by** a sensor (30), especially an optical sensor, which is disposed on the support foot (110, 210), for receiving a transmitted signal and for generating a sensor signal containing information on the height setting of the support foot (110, 210).

5. Support rod according to claim 4,
**characterised in that** the sensor (30) has a plurality of sensor elements (32) arranged along the longitudinal direction of the support rod.

6. Method for building a foundation for a structure comprising a plurality of segments, especially for a tower (2) of a wind power installation, comprising the following steps:
a) excavating a foundation bed (13),
b) building a stable, substantially level and horizontal subbase (12) in the foundation bed (13),
c) placing a foundation segment (4) of the structure on the subbase (12), wherein at least three adjustable-height support rods (11, 21) according to any one of claims 1 to 5 are distributed over and fixedly attached to the foundation segment (4) by means of a respective support foot (110) attached to the end of the support rods (11, 21), in such a manner that only the support rods (11, 21) are set down on predetermined support points (14) of the subbase (12),
d) producing a reinforcement on the subbase,
e) casting the remainder of the foundation bed with foundation material, especially concrete, to a level above the lower edge of the foundation segment (4).

7. Method according to claim 6,
**characterised in that** the support rods (11) are each attached by means of support plates (110) to a flange (42) disposed on the underside (41) of the foundation segment (4).

8. Method according to one of claims 6 to 7,
**characterised in that** the height adjustment of the support rods (11) each having an internal threaded rod (114) is carried out by means of a height adjustment device disposed at the lower end of the support rods (11) towards the subbase (12).

9. Method according to claim 6,
**characterised in that** the support rods (21) are each attached to a flange (45) extending at the upper edge of the foundation segment (4).

10. Method according to claim 9,
**characterised in that** the support rods (21) are passed through eyes (46) attached to the lower edge of the foundation segment (4) and extend inside the foundation segment (4).

11. Method according to any one of claims 6 to 10,
**characterised in that**, for casting of the remainder of the foundation bed with foundation material, first the foundation bed is cast approximately up to the lower edge of the foundation segment (4), thereafter any height adjustment of the foundation segment (4) is performed and then the remainder of the foundation bed is cast.

12. Method according to any one of claims 6 to 11,
**characterised in that** the support points (14) on the subbase (12) are mechanically reinforced.

13. Method according to any one of claims 6 to 12,
**characterised in that** the reinforcement is woven through holes (43) provided in the side walls of the foundation segment (4), and the casting of the remainder of the foundation bed (13) with foundation material is carried out to a height such that the holes (43) are covered over by foundation material.

14. Method according to any one of claims 6 to 13,
**characterised in that**, for setting the height of the support feet (110, 210), measurement of the current height setting of the individual support feet is carried out by means of appropriate measuring means, especially optical measuring means.

15. Method according to claim 14,
**characterised in that**, for setting the height of the support feet (110, 210), a height measurement signal, especially a bundled light beam (35), is transmitted in a horizontal direction from a transmitting device (35) disposed in the interior of the foundation segment (4), especially from a light source, to the support feet (110, 210) equipped with a corresponding sensor (30), especially an optical sensor, a sensor signal is generated by the sensors (30), each signal containing information on the height setting of the corresponding support foot (110, 210), and the height of the associated support foot (110, 210) is set as a function of the sensor signal generated.

16. Method according to claim 15,
**characterised in that** the height of the support feet (110, 210) is set by means of a controlled drive (216), the sensor signals generated by the sensors (30) being evaluated for the control.

17. Foundation segment for a structure comprising a plurality of segments, especially for a tower of a wind power installation,
**characterised in that** at least three adjustable-height support rods (11, 21) according to any one of claims 12 to 16 are distributed over and fixedly attached to the foundation segment (4) by means of a respective support foot (110, 210) attached to the end of the 21), for setting down of the foundation segment (4) on support points (14) of a subbase (12) in a foundation bed (13).

18. Foundation segment according to claim 17,
**characterised in that** holes, especially a circumferentially extending row of holes (43), are provided in the side walls of the foundation segment (4) in order for reinforcing steel to be passed through to make a mechanical connection between the reinforcement and the foundation segment (4).

19. Wind power installation having a tower (2) comprising a plurality of segments, wherein the lowermost segment is a foundation segment (4) according to claim 17 or 18.

20. Wind power installation having a tower comprising a plurality of segments, wherein the foundation (5) of the tower (2) is produced by a method according to any one of claims 6 to 16.

## Revendications

1. Pilotis d'appui destiné à être utilisé dans le cadre d'un procédé de réalisation d'un massif de fondation pour un édifice ou une construction présentant plusieurs segments, notamment pour un pylône ou un mât d'une installation éolienne,
**caractérisé par** un tube extérieur (211) et un pied d'appui (210) à une extrémité du pilotis d'appui (21), le pied d'appui (210) présentant une tige (26) qui peut coulisser dans le tube extérieur (211), une première plaque (22) rapportée sur le tube extérieur (211), et une deuxième plaque (23) rapportée sur la tige (26), ces plaques étant reliées au moyen d'au moins une tige filetée (24) pour faire varier la distance d'espacement entre les deux plaques (22, 23), et la deuxième plaque (23) étant configurée pour assurer une liaison fixe avec un élément (4) à supporter.

2. Pilotis d'appui selon la revendication 1,
**caractérisé par** une plaque de semelle (213) à l'extrémité du pilotis d'appui (21), opposée à celle où se trouve le pied d'appui (210).

3. Pilotis d'appui selon l'une des revendications 1 à 2,
**caractérisé par** des moyens d'entraînement (216), notamment des moyens d'entraînement hydrauliques ou pneumatiques, pour le réglage en hauteur des pieds d'appui (110, 210).

4. Pilotis d'appui selon l'une des revendications 1 à 3,
**caractérisé par** un détecteur (30), notamment un détecteur optique, qui est agencé sur le pied d'appui (110, 210), pour la réception d'un signal d'émission et pour l'élaboration d'un signal de détecteur contenant une information relative au réglage en hauteur du pied d'appui (110, 210).

5. Pilotis d'appui selon la revendication 4,
**caractérisé en ce que** le détecteur (30) comprend plusieurs éléments de détecteur (32) agencés le long de la direction longitudinale du pilotis d'appui.

6. Procédé de réalisation d'un massif de fondation pour un édifice ou une construction présentant plusieurs segments, notamment pour un pylône d'une installation éolienne, comprenant les étapes suivantes :
f) excavation d'une fouille de fondation (13),
g) réalisation d'une couche de propreté (12) stable, s'étendant de façon sensiblement plane et horizontale dans la fouille de fondation (13),
h) mise en place d'un segment de fondation (4) de l'édifice sur la couche de propreté (12), au moins trois pilotis d'appui (11, 21) réglables en hauteur selon l'une des revendications 1 à 5 étant rapportés de manière fixe et répartie sur le segment de fondation (4), au moyen d'un pied d'appui (110) agencé respectivement à l'extrémité des pilotis d'appui (11, 21) de façon telle, que seuls les pilotis d'appui (11, 21) soient posés sur des points d'appui (14) prédéterminés de la couche de propreté (12),
i) réalisation d'une armature sur la couche de propreté,
j) coulée d'une masse de fondation, notamment du béton, dans le restant de la fouille de fondation, jusqu'au-dessus du bord inférieur du segment de fondation (4).

7. Procédé selon la revendication 6,
**caractérisé en ce que** les pilotis d'appui (11) sont rapportés respectivement au moyen de plaques d'appui (110), sur un flasque (42) agencé sur le côté inférieur (41) du segment de fondation (4).

8. Procédé selon l'une des revendications 6 à 7,
**caractérisé en ce que** le réglage en hauteur des pilotis d'appui (11) présentant chacun une tige filetée (114) placée à l'intérieur, s'effectue au moyen d'un dispositif de réglage de hauteur agencé à l'extrémité inférieure des pilotis d'appui (11), qui est dirigée vers la couche de propreté (12).

9. Procédé selon la revendication 6,
**caractérisé en ce que** les pilotis d'appui (21) sont rapportés chacun sur un flasque (45) s'étendant au niveau du bord supérieur du segment de fondation (4).

10. Procédé selon la revendication 9,
**caractérisé en ce que** les pilotis d'appui (21) traversent des anneaux (46) agencés au niveau du bord inférieur du segment de fondation (4) en y étant guidés, et s'étendent à l'intérieur du segment de fondation (4).

11. Procédé selon l'une des revendications 6 à 10,
**caractérisé en ce que** pour la coulée d'une masse de fondation dans le restant de la fouille de fondation, on remplit tout d'abord la fouille de fondation environ jusqu'au bord inférieur du segment de fondation (4), **en ce que** l'on effectue ensuite un éventuel ajustement de hauteur du segment de fondation (4), et **en ce que** l'on remplit alors le restant de la fouille de fondation.

12. Procédé selon l'une des revendications 6 à 11,
**caractérisé en ce que** les points d'appui (14) sur la couche de propreté (12) sont renforcés mécaniquement.

13. Procédé selon l'une des revendications 6 à 12,
**caractérisé en ce que** l'armature est tressée à travers des trous (43) prévus dans les parois latérales du segment de fondation (4), et **en ce que** la coulée de remplissage de la fouille de fondation (13) avec la masse de fondation est effectuée jusqu'à une hauteur telle, que les trous (43) soient recouverts par la masse de fondation.

14. Procédé selon l'une des revendications 6 à 13,
**caractérisé en ce que** pour le réglage en hauteur des pieds d'appui (110, 210), on effectue une mesure du réglage en hauteur actuel des pieds d'appui individuels, à l'aide de moyens de mesure appropriés, notamment des moyens de mesure optiques.

15. Procédé selon la revendication 14,
**caractérisé en ce que** pour le réglage en hauteur des pieds d'appui (110, 210), un dispositif émetteur (35), notamment une source de lumière, agencé dans l'espace intérieur du segment de fondation (4), émet dans la direction horizontale, un signal de mesure de hauteur, notamment un rayon lumineux (35) en faisceau, en direction des pieds d'appui (110, 210) équipés chacun d'un détecteur (30) correspondant, notamment un détecteur optique, **en ce que** les détecteurs engendrent chacun un signal de détecteur renfermant une information relative au réglage en hauteur du pied d'appui (110, 210) correspondant, et **en ce qu'**en fonction du signal de détecteur engendré, est effectué le réglage en hauteur du pied d'appui (110, 210) associé.

16. Procédé selon la revendication 15,
**caractérisé en ce que** le réglage en hauteur des pieds d'appui (110, 210) est effectué à l'aide d'un système d'entraînement (216) commandé, les signaux de détecteur engendrés par les détecteurs (30) étant traités et exploités pour assurer la commande.

17. Segment de fondation pour un édifice ou une construction présentant plusieurs segments, notamment pour un pylône d'une installation éolienne,
**caractérisé en ce que** sur le segment de fondation (4) sont rapportés de manière fixe et répartie, au moins trois pilotis d'appui (11, 21) réglables en hauteur selon l'une des revendications 1 à 5, au moyen d'un pied d'appui (110, 210)) agencé respectivement à l'extrémité des pilotis d'appui (11, 21), en vue de poser le segment de fondation (4) sur des points d'appui (14) d'une couche de propreté (12) dans une fouille de fondation (13).

18. Segment de fondation selon la revendication 17,
**caractérisé en ce que** dans les parois latérales du segment de fondation (4) sont prévus des trous, notamment une rangée périphérique de trous (43), en vue d'y faire passer des aciers d'armature pour la réalisation d'une liaison mécanique entre l'armature et le segment de fondation (4).

19. Installation éolienne comprenant un pylône (2) présentant plusieurs segments, le segment inférieur étant un segment de fondation (4) selon la revendication 17 ou la revendication 18.

20. Installation éolienne comprenant un pylône présentant plusieurs segments, le massif de fondation (5) du pylône (2) étant réalisé par un procédé selon l'une des revendications 6 à 16.
